# EUROPEAN PATENT SPECIFICATION

(11) **EP 2 470 602 B1**
(45) Date of publication and mention of the grant of the patent: **06.09.2017**
(21) Application number: 10749692.9
(22) Date of filing: 28.07.2010
(51) Int. Cl.: C08L 23/10

(54) **THERMOPLASTIC POLYMER COMPOSITE**
THERMOPLASTISCHES POLYMERKOMPOSIT
COMPOSITE DE POLYMÈRE THERMOPLASTIQUE

(30) Priority: 27.08.2009 PL 38889909
(43) Date of publication of application: 04.07.2012
(73) Proprietor: Instytut Wlokien Naturalnych I Roslin Zielarskich, 60-630 Poznan (PL); Kozlowski, Ryszard, 61-606 Poznan (PL)
(72) Inventor: KOZLOWSKI, Ryszard, 61-606 Poznan (PL); MANKOWSKI, Jerzy, 61-308 Poznan (PL); GARBARCZYK, Józef, 60-586 Poznan (PL); PAUKSZTA, Dominik, 60-618 Poznan (PL); BORYSIAK, Slawomir, 61-020 Zalasewo (PL)
(74) Representative: Rzazewska, Dorota
(86) International application number: PCT/PL2010/000065
(87) International publication number: WO 2011/025398

(56) References cited:
- Paukszta D: "Chemical composition of wooden parts of rape stern"[Online] 2006, XP002603854 Biblioteka Naukowa Institut Hodowli i Aklimatyzacji Roslin Retrieved from the Internet: URL:http://www.ihar.edu.pl/biblioteka/oils eed_crops.php?field%5Bslowa_kluczowe%5D=&f ield%5Bautor%5D=&id=22&idd=561&podzial_id= 1&podzial_idd=> [retrieved on 2010-10-07]
- Paukszta D: "Composite materials obtained from thermoplastic polymers and lignocellulosic materials from rapeseed straw."[Online] 2005, XP002603867 Biblioteka Naukowa Institut Hodowli i Aklimatyzacji Roslin Retrieved from the Internet: URL:http://www.ihar.edu.pl/biblioteka/oils eed_crops.php?field%5Bslowa_kluczowe%5D=&f ield%5Bautor%5D=&id=15&idd=450&podzial_id= 1&podzial_idd=> [retrieved on 2010-10-07]
- HAN-SEUNG YANG ET AL: "Properties of lignocellulosic material filled polypropylene bio-composites made with different manufacturing processes" POLYMER TESTING, vol. 25, no. 5, 17 March 2006 (2006-03-17), pages 668-676, XP002603880
- A.R. Sanadi: "thermal and mechanical analysis of lignocellulosic polypropylene composite" The Fifth International Conference on Woodfiber-Plastic Composites ,Madison, Wisconsin, USA., [Online] 26 May 1999 (1999-05-26), - 27 May 1999 (1999-05-27) pages 67-78, XP002603881 Forest Products Laboratory Retrieved from the Internet: URL:http://www.fpl.fs.fed.us/documnts/pdf1 999/sanad99a.pdf> [retrieved on 2010-10-07]

## Description

The present invention relates to a thermoplastic polymer composite. In more detail, it relates to a composite material containing a matrix made isotactic polypropylene and a filler in the form of rapeseedseed straw.

Recently, thermoplastic polymer composites with natural lignocellulosic fillers have been more and more widely used due to their advantageous properties and the fact that they can be manufactured by using commonly available processing methods [see: B 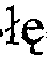 dzki A.K., Letman M., Viksne A., Rence L., Composites Part A, vol. 36, 789, (2005); Stark M.M., Rowlands R.E., Wood Fiber Sci., vol. 35, 167, (2003)]. The ecological aspect seems to be an important feature of such composites, since they can be produced using recyclable materials. Moreover, these composite systems may be partially or completely biodegradable after their service life expires [see: Paukszta D., Szostak M., Górniaczyk M., Borysiak S., *Recykling i odzysk materia* 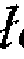 *ów polimerowych [Recycling and recovery of polymeric materials],* multi-author work edited by A.K. B 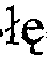 dzki and Z. Tartakowski, Wyd. Politechniki Szczecińskiej *[The Szczecin University of Technology Publishing House],* pages 237-239, (2008)]. Chemical modification of lignocellulosic components is significantly important for changing the mechanical properties of composite materials. It was also found that the type of filler has significant influence on the mechanical of composite materials.

The known literature describes composite materials made on the basis of various wood species, natural fibres (like flax, hemp, sisal, jute and so on), and wheat straw. However, composite materials based on rapeseed straw have not been described in technical literature yet.

D. Dziurka and others have examined the properties of boards produced from rapeseed straw for various binding materials and resin content levels. The examinations proved that lignocellulosic boards with properties similar to boards available on the market can be produced with the addition of UF, PF, MUPF, and PMDI resins used as the material which binds the straw particles, thus straw boards with better mechanical properties feature a higher resin content than the content of binding agent. It was also found that using an isocyanate resin in low proportion (6%), it is possible to produce boards featuring better moisture resistance and improved mechanical properties than boards produced by using other resins; so these boards may find more common applications in the industry [see: Dziurka, D., Mirski, R., 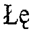 cka, J., *Properties of boards manufactured from rapeseed straw defending on the type of the binding agent,* Electronic Journal of Polish Agricultural Universities, vol. 8, issue 3, 2005, *http:*//*www.ejpau.media.pl*/*volume8*/*issue3*/*art-05.html*]*.*

The Polish patent application PL 334732 (application date 20.01.1998) discloses wet-laid web of unpulped natural fibres and the composite material in which such web is used. Wet-laid fibrous webs have reinforcing properties obtained by using unpulped bundles of vegetable fibres as the dominant component. Unpulped fibre bundles have the modulus of elasticity of about 2-5x10⁶ psi and preferably the chopped fibre length of about 25 mm. The fibres are of the cordage type and contain sisal, abaca, agave, kenaf and jute. Composites of the unpulped fibre webs with cellulosic sheets and spun-bonded fibres find application as thermally moulded parts of vehicle interior trim.

Polish patent application PL 342559 (application date 15.09.2000) discloses the composite material reinforced with fibre bundles and having the ceramic matrix and the method of manufacturing this material. The composite contains bundles of fibres which consist of two different fractions of fibre bundles with different average fibre length, and both fractions are separated, as a minimum, in total fibre bundles mass distribution with reference to the length of fibre bundles. The composite has a matrix improved in relation to these known from the state of the art, with uniform phase composition, and contains minor cracks at worst.

Patent application PL 362734 (application date 10.10.2003) discloses the method for manufacture of boards and structural elements from organic substances, particularly from rye and oat straw, and the structural element made of organic substances. The method of manufacture is characterised in that a spike is cut away from straw, then straw is cut longitudinally on one side, soaked in water for 10 to 15 minutes, pressed flat and laid side-by-side, internal surface up, until the desired width and length is reached, then covered with the layer of natural or synthetic binding agent. On this layer the next layer of parallel lengths of straw previously prepared by cutting, soaking and pressing flat is laid, internal surface down, at an angle between 15° and 90°. Such a prepared structural element in the form of board or panel is pressed down and left to dry in order to achieve the desired thickness, then its upper surface is wiped and gets the layer of binding agent and then the second structural element with wiped contact surface, and so prepared sandwich structure is pressed together, An admixture of bark, wood chips or chips of lignified parts of stalks of plants like cotton, reed, hemp, jute and grass is scattered on the substrate formed from the flat-pressed straw stalks. To obtain an additional visual effect, some decorative in the form of leaves or other lignified parts of plants are laid under the substrate of flat-pressed straw stalks. The structural element made of organic substances is characterized in that it is composed of the following layers, alternately laid, one on top of the other: layer of organic substance lengths (1); layer of binding agent (2); layer of organic substance lengths (3) laid at an angle of 90 degrees with respect to the organic substance lengths of the preceding layer of organic substance lengths; and the layer of binding agent, until the desired thickness of structural element is reached, and wherein the parallel lengths of consecutive layer of organic substance are laid at an angle of between 15° and 90° with respect to the layer of organic substance lengths belonging to the previous layer of structural element.

In patent description PL 186577 (application date 16.06.1997) the method is disclosed for manufacture of composite material from thermoplastic polymer and fibres. The thermoplastic polymer is mixed with cut natural fibres with the length of 0.5 - 3.0 mm, preferably flax or hemp fibres. Upon mixing, the material is extruded at the temperature within the lower range of the melting point and with the speed sufficient for the mixture passing the heating zone of the extruding machine within 20 to 35 seconds, and then granulated. So produced granulate, upon reinforcing with natural fibres, can be further processed by using various methods. In the solution according to the invention, natural fibres (hemp, flax, and so on) were used for production of a composite material with thermoplastic polymer, where preferable length of chopped fibres was between 1 - 3 mm. Despite the known solutions described above, there is still a permanent demand for composite material containing natural lignocellulosic fillers, in particular rapeseed straw being the by-product of breeding and growing rapeseed.

Publication of D. Paukszta "Composite materials obtained from thermoplastic polymers and lignocellulosic materials from rapeseed straw" Oilseed Crops, Plant Breeding and Aclimatization Institute, Poznań 2005 discloses mechanical properties of composites isostatic polypropylene/rape containing straw without parenchyma, and composites having 15% of lignocellulosic material.

Publication of D. Paukszta "Chemical composition of wooden parts of rape stem" Oilseed Crops, 2006 discloses chemical composition of the used components of wooden parts of the stem of rape (straw without parenchyma). The purpose of this invention is to obtain the composite material which contains a matrix that is composed of an isotactic polypropylene and a filler in the form of rapeseed straw. unexpectedly, the composite was obtained with so selected properties of composite materials like mechanical acoustic and flammability properties that it can fit for applications in various industries, particularly in constructive and automotive ones. The isostatic polypropylene polymers have a softening not exceeding 260°C and rapeseed straw is preferably ground and contains parenchyma and the straw content between 25 and 85% of composite. The thermoplastic polymer matrix is an isotactic polypropylene. Also preferably, filler in polymer matrix is uniformly distributed in order to ensure uniform distribution of stresses, improve hardness and Young's modulus, and reduce impact resistance and elongation as compared with analogous material made of pure (non filled) polymer, and also when lignocellulosic filler in polypropylene matrix reduces the elasticity as compared with an analogous polymer with no filler. Preferably, the composite features the value of elastic constant greater than an analogous pure (i.e. unfilled) polymer, and the modulus of elasticity for the composite increases as the content of lignocellulosic material increases. Preferably, the impact resistance of composite decreases when the mass contribution of lignocellulosic material increases, and impact resistance is greater for composite with lignocellulosic filler with particle size below 0.25 mm. Preferably, the Young's modulus of composites is greater than that of unfilled polypropylenes, and the value of Young's modulus for composite increases as the melt flow index (MFI) increases. The hardness of composite preferably increases with increase of lignocellulosic material mass fraction in the composite. It is also preferable when, in the presence of filler, the maximum rate of heat release from the composite decreases; preferably when the composite is filled with rapeseed straw to the level of 25%, the heat release rate decreases by 15% at least. Preferably, the total heat release (THR) is greater for composites than for analogous pure polymer and the composite with the matrix characterised by higher value of melt flow index (MFI) has longer ignition time, longer time of complete combustion, lower heat release rate (HRR), and lower mass loss rate (MLR), and the time to ignition for composite materials is shorter than for an unfilled polymer. Also preferably, the mass loss rate for the composite is by at least 15% lower than for an analogous pure polymer. Preferably, the presence of lignocellulosic filler causes uniform heat release during combustion and, still preferably, the quantities of heat and fumes released, as well as gas emissions, are lower than for the analogous material made of pure polymer and, also preferably, at the same time the composite features a shorter ignition time than an analogous pure polymer. Preferably, the composite is in the form of granulate or powder.

For better understanding of the invention, some examples of its embodiments are presented below.

### Examples

During manufacture of composites, the adhesion between polymeric matrix and filler plays a significant role, this adhesion being low when polyolefines are used. For this reason it is good to chemically modify the lignocellulosic material [see: Hill C.A.S., *Wood Modification: Chemical, Thermal and Other Processes,* C.V. Stevens, Eds., Wiley, Chapter 3 and 4, pp. 45-98, (2006); Rowell R.M., Encyclopedia of Forest Sciences; J. Burley, J. Evans, J. Youngquist, Eds., Elsevier Academic Press: The Boulevard, Lanford Lane Kidlington, Oxford, pp. 1269-1274, (2004)]. For comparison purposes the results of examinations are presented for both native and modified fillers, and Table 1 below shows the properties of polypropylene [see: J. Koszkul, "Polipropylen i jego kompozyty" *[Polypropylene and its composites],* Wydawnictwo Politechniki Cz 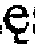 stochowskiej *[The Cz* 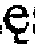 *stochowa University of Technology Publishing House],* Cz 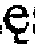 stochowa 1997].

**Table 1. Properties of polypropylene**

| **Properties** | **Unit of measure** | **Value** |
|---|---|---|
| Density | kg/m³ | 900÷910 |
| Crystallite melting point | °C | 160÷170 |
| Glass transition temperature | °C | -30÷-10 |
| Softening point (Vicat) | °C | 120÷155 |
| Tensile strength | MPa | 20÷38 |
| Young's modulus | MPa | 1500÷2500 |
| Ultimate elongation | % | 400÷700 |
| Compression strength | MPa | 70÷100 |
| Bending strength | MPa | 40÷60 |
| Impact strength (Charpy, without notch) | kJ/m² | does not break |
| Hardness | N/mm² | 25÷50 |
| Volume resistivity | Ω·m | 10¹⁷÷10¹⁹ |
| Permittivity | - | 2.1 |
| Dielectric loss factor tg δ (50 Hz) | - | 0.0003÷0.002 |
| Oxygen index | % | 17÷18 |
| Combustion heat | J/kg | 46.5 |
| Specific thermal capacity *Cₚ* | J(kg·K) | 1700 |
| Thermal conductivity λ | W/(m·K) | 0.3÷0.4 |
| Linear expansion coefficient (α·10⁻⁴) | K⁻¹ | 1.8 |
| Water absorbing capacity after 24h | % | 0.03 |

The solution according to the invention is the continuation of works on composites of thermoplastic polymers and fibres and, as such, the composites according to the invention have been fabricated in compliance with principal assumptions of the composite production method from thermoplastic polymer and fibres, as disclosed in patent description No. PL 186577.

The phenomena that occur during manufacturing and processing of composites containing lignocellulosic material include stresses in polymeric matrix, primarily induced by shearing forces acting between the plastic and the element of extruder or injection moulding machine. In case of matrix made of isotactic polypropylene (iPP) these shearing forces may cause formation of hexagonal form (β-iPP), most often along with formation of monoclinic form (α-iPP). The presence of β-iPP form induces change of some physical and chemical properties of the product, decrease of elastic modulus and tensile strength values, and also increase of ultimate elongation and plasticity as compared with samples made of iPP [see: J. Garbarczyk, S. Borysiak, Polimery 2004, vol. 49, issue 7-8].

### Example I

### Preparation of composites containing 25% of rapeseed straw

The composites were made of lignocellulosic material obtained from rapeseed straw (S) and four types of isotactic polypropylene (iPP) featuring different values of melt flow index (MFI).

The S/iPP composites were prepared using the extrusion method. The composites with following compositions were prepared:
a) 25% S + 75% iPP Malen F-401
b) 25% S + 75% iPP Malen S-702
c) 25% S + 75% iPP Moplen HP-548R
d) 25% S + 75% iPP Moplen HP-648T

The parameters of extrusion process were the same for all composites:
- Pressure at head: 10-15 bar;
- Screw rotational speed: 30 rpm;
- Extrusion temperature: initial zone: 20°C, zone 1: 140°C, zone 2: 180°C, zone 3: 195°C, head: 195°C, nozzle: 200°C.

The extruded material was quickly cooled with water and then granulated.

### Examinations - series I

### 1) Influence of filling polypropylenes with various values of melt flow index with rapeseed straw on reduction of hardness

The measurements were made on three randomly chosen samples of composite materials and unfilled polypropylenes. Five measurements of hardness were taken on each sample by using ball indentation method [PN-EN ISO 2039-1] and the Brinell hardness tester.

**Table 2. Hardness of polymers and composites [N/mm²]**

| | **Unfilled polymer** | **S/iPP composite** |
|---|---|---|
| **Malen F-401** | 49.97 | 42.39 |
| **S-702** | 52.12 | 42.69 |
| **HP548R** | 52.89 | 46.14 |
| **HP648T** | 58.05 | 44.61 |

The hardness of pure (unfilled) polypropylenes is greater than for composites, and the hardness of pure polypropylenes with different MFI values increases, but only slightly, as the MFI value of polypropylene used as a matrix in the composite increases. The hardness of composites containing polypropylenes with various MFI values is on approximately the same level.

### 2) Influence of filling polypropylenes with various values of melt flow index with rapeseed straw on change in impact resistance

The impact resistance value was measured on five randomly chosen samples of unfilled polypropylene homopolymers (F-401, S-702, HP 548R, HP 648T) and their composites formed by filling with lignocellulosic material obtained from rapeseed straw to the filling level of 25%.

**Table 3. Impact resistance of polymers and composites [kJ/m²]**

| | **Unfilled polymer** | **Composite** |
|---|---|---|
| **Malen F-401** | 20.31 | 15.93 |
| **S-702** | 15.57 | 13.81 |
| **HP548R** | 16.54 | 16.66 |
| **HP648T** | 17.34 | 14.76 |

The polypropylene composites do not show significant differences in impact resistance, and the greatest difference in impact resistance was measured for unfilled F-401 polypropylene and its composite.

### 3) Inf luence of filling polypropylenes with various values of melt flow index with rapeseed straw on ultimate elongation

Mechanical examinations of composites during tensioning were made for five randomly chosen samples previously obtained in the injection process.

**Table 4. Elongation at break [%] of polymers and composites**

| | **Unfilled polymer** | **Composite** |
|---|---|---|
| **Malen F-401** | 391.28 | 7.95 |
| **S-702** | 389.98 | 6.69 |
| **HP548R** | 392.86 | 8.01 |
| **HP648T** | 389.89 | 7.08 |

There were significant differences between unfilled polypropylenes with various MFI values that elongation at break of above 300% and their composites. The composites made of polypropylenes with various MFI values, filled with ground rapeseed straw, exhibit poor extensibility. At the same time, the difference between the composite with the lowest elongation at break and the composite with the highest one amounts to 2% only.

### 4) Influence of filling polypropylenes with various values of melt flow index with rapeseed straw on true tensile stress

Mechanical examinations of composites during tensioning were made for five randomly chosen samples previously obtained in the injection process.

**Table 5. Tensile stress [MPa] of polymers and composites**

| | **Unfilled polymer** | **Composite** |
|---|---|---|
| **Malen F-401** | 22.64 | 21.67 |
| **S-702** | 20.40 | 22.37 |
| **HP548R** | 20.07 | 22.01 |
| **HP648T** | 19.79 | 20.53 |

The value of tensile stress is approximately the same for all composite materials.

### 5) Influence of filling polypropylenes with various values of melt flow index with rapeseed straw on the Young's modulus

**Table 6. The Young's modulus [MPa] of polymers and composites**

| | **Unfilled polymer** | **Composite** |
|---|---|---|
| **Malen F-401** | 477.66 | 535.69 |
| **S-702** | 535.77 | 655.40 |
| **HP548R** | 545.06 | 782.29 |
| **HP648T** | 524.13 | 650.11 |

It is characteristic for composites containing rapeseed straw that their Young's modulus is much greater than in case of unfilled polypropylenes with various values of MFI index. Conclusions:
As follows from the above examinations, composites show much smaller ultimate elongation than unfilled polypropylenes. However, comparison between composites proves that as far as the ultimate elongation is concerned, there are no significant differences between them - individual values do not differ by more than 1 - 2 %.

The value of Young's modulus for composites is greater than for unfilled polypropylenes. The value of this parameter for individual composites increases as the MFI value increases. Tensile examinations show that in comparison with unfilled polypropylenes, composites feature lower tensile strength and higher stiffness, therefore, composites may find application in all cases where use of composites with higher stiffness and shape preservation is required.

### 6) Flammability examinations for polymers and composites

Examinations of flammability performed for both polymers and composites allowed determining that in case of filling with rapeseed straw in 25%, the heat release rate HRR falls down to the following values (assuming 100% for unfilled polypropylene): Malen F-401/rapeseed straw - 70%, Malen S-702/ rapeseed straw - 59%, Moplen HP 548R/ rapeseed straw - 56%, Moplen HP 648T/ rapeseed straw - 63%.

The presence of lignocellulosic material in the composite is favourable due to the possibility of flame propagation (as compared with unfilled polypropylenes). The composites, when burning, release heat uniformly, but in case of unfilled polypropylenes heat emission is much more sudden. The value of Total Heat Released (THR) is greater for composites than for unfilled polypropylenes. The lowest value of maximum heat release rate (HRRmax) was measured for the composite containing the F-401 polypropylene and the unfilled F-401 polypropylene.

### Conclusions:

- The polypropylene composites with higher MFI values show longer time to ignition (TTI), longer full combustion time, and lower maximum heat release rate (HRRmax). For polypropylene with the highest MFI value the fast mass loss was observed, whereas for the composite the mass loss rate is lower by 40%.
   The fastest mass loss was found for S-702 polypropylene which bums most dynamically, while its composite bums much slower and mass loss rate is lower by 30%.
   The lowest value of mass loss rate was found for HP 548R polypropylene.
- The presence of lignocellulosic filler causes uniform heat release during combustion. The amount of released heat is smaller than for unfilled polypropylene. At the same time, the composites feature a short time to ignition, as compared with unfilled polypropylenes. Polypropylene samples burn completely, whereas composites leave ash from lignocellulosic material after burning.
- TTI values for composite materials are smaller than for polypropylenes; the values of HRRmax (maximum heat release rate) and MLR (mass loss rate) parameters for composites are significantly smaller than for unfilled polypropylenes.

### Example II

### Two different levels of filling with rapeseed straw were used: 25% and 40%.

Based on examination results from Example I, where the composites were filled with rapeseed straw in 25%, it was decided to increase the content of lignocellulosic filler up to 40%.

### Examinations - series II

The composites produced from Malen F-401 polypropylene and rapeseed straw of two varieties, i.e. Californium and Lisek, were examined.

In comparison with the first series of examinations, the material with different grounding level was used (fraction below 0.25mm).

**Table 7. Results obtained in 2^{nd} series of examinations**

| Properties | Filling levels | | |
|---|---|---|---|
| | PP - isotactic polypropylene MALEN-P F-401 | K25 - the composite containing 25% of rapeseed straw | K40 - the composite containing 40% of rapeseed straw |
| Elongation at break [%] | | 8.6% | 7.6% |
| Tensile stress [MPa] | 22 MPa | 17.5 MPa | 14.8 MPa |
| Young's modulus [MPa] | 477 MPa | 520 | 675 |
| Impact resistance [kJ/m²] | | 26.10 [kJ/m²] | 18.66 [kJ/m²] |
| Hardness [N/mm²] | 52 [N/mm²] | 50 [N/mm²] | 54 [N/mm²] |

### Conclusions:

1. The presence of lignocellulosic filler in polypropylene matrix lowers the value of tensile stress, and with increase of filling degree the value of tensile stress decreases, probably due to taking the stresses by filler particles. This means that size of lignocellulosic filler particles is essential. In case of fine particles (0.25 mm and smaller), the value of true tensile stress is lower than the value for the composite containing filler with particle size from 1 to 2 mm.
   The results pertaining to true tensile stress values indicate that composites being examined transmit stresses well, despite the content of finely ground material and its high mass fraction in the composite.
2. The composites feature a higher elastic constant than pure polypropylene, and value of elastic constant for composite increases as the amount of lignocellulosic material increases. The composites obtained have good mechanical properties, since the value of elastic constant indicates that high stress is necessary to deform a sample. For the composite with 40% fraction of filler, the value of elastic constant, as compared with pure polymer is considerable for materials filled with small particles of rapeseed straw and exceeds the value for composite filled in 25% with lignocellulosic material from rapeseed straw.
3. As the mass fraction of lignocellulosic material in the composite increases, the impact resistance decreases. The value of impact resistance is greater for the composite containing lignocellulosic filler with particle size below 0.25 mm. Even the composite with 40% fraction of such particles shows the impact resistance close to the sample containing 25% wt. of filler with particle size from 1 to 2 mm. This phenomenon may be caused by good dispersion of powdered lignocellulosic material in polymeric matrix. Thanks to close packing of particles in polypropylene warp the composite gained the resistance to impacts.
4. Hardness tests carried out during examinations did not show large differences between composites, as well as in relation to pure polypropylene. The hardness values for all samples are almost the same, although the composite with 40% mass fraction of filler shows higher hardness than other samples.
5. Examinations of mechanical properties confirm the usability potential of composites. Keeping in mind their aesthetic qualities, these materials have good opportunity to find applications, particularly in automotive, furniture, and construction industries.

### Example III

The composites with four different varieties of rapeseed were examined (one variety of rapeseed straw in each composite): Californium (French variety), Lisek (German variety), Bojan (Polish variety), and Kaszub (Polish variety). For all composites the Malen F-401 polypropylene was used, and concentration of 30%. Also the influence of chemical modification of chopped straw on properties of composites was examined; a chopped straw was firstly subjected to mercerising process (reaction with the sodium base solution) in order to transform cellulose I into polymorphic form of cellulose II, then subjected to acetic anhydride for better adhesion between both materials after formation of composite.

To obtain a composite with favourable properties it is necessary to take into account many factors at both the raw materials preparation and composite fabrication stages. One of the essential problems is poor adhesion between hydrophilic fibrous component and hydrophobic polymeric matrix. To improve compatibility, the chemical modification of cellulose fibres is used [see: J. Garbarczyk, S. Borysiak, Polimery 2004, vol. 49, issue 7-8]. The mercerized woody cores of rapeseed straw were subjected to chemical modification with acetic anhydride. The purpose of this process is to improve adhesion at the phase boundary between matrix (isotactic polypropylene) and filler (rapeseed straw).

### Examinations - series III

To make examination results more readable, the composites were designated with abbreviated (code) names. First letter indicates the lignocellulosic material (**M** - modified, or **N** - raw (unmodified)), while the second letter is a first letter of the rapeseed variety name.

**Table 8. Abbreviated names of composites used in examinations**

| **Type of composite** | **Abbreviated name** | **Type of composite** | **Abbreviated name** |
|---|---|---|---|
| The composite of iPP and raw straw of Kaszub variety rapeseed | NK | The composite of iPP and modified straw of Kaszub variety rapeseed | MK |
| The composite of iPP and raw straw of Bojan variety rapeseed | NB | The composite of iPP and modified straw of Bojan variety rapeseed | MB |
| The composite of iPP and raw straw of Lisek variety rapeseed | NL | The composite of iPP and modified straw of Lisek variety rapeseed | ML |
| The composite of iPP and raw straw of Californium variety rapeseed | NC | The composite of iPP and modified straw of Californium variety rapeseed | MC |
| Isotactic polypropylene MALEN - PP-401 | iPP | | |

### 1) Determination of hardness using ball indentation method

The measurements were taken on three randomly chosen samples of each type of composite. Measuring points were placed on surface of samples - five points on the injection side and another five on the opposite side. In this way 30 measurements were made for each sample.

**Table 9. Average values of hardness for different types of composites**

| **Sample type** | **Hardness, HK [N/mm²]** | **Standard deviation** |
|---|---|---|
| NK | 55.83 | 1.85 |
| NB | 53.52 | 2.38 |
| NL | 56.53 | 1.81 |
| NC | 54.72 | 2.65 |
| MK | 58.02 | 1.78 |
| MB | 57.90 | 1.07 |
| ML | 57.79 | 1.88 |
| MC | 59.27 | 1.35 |
| iPP | 54.20 | 2.15 |
| The values for iPP (Malen PF-401) are shown according to the literature [see: T. Górecki; Master's thesis, The Poznań University of Technology, Poznan 2004, and A Wolska, Master's Thesis, The Poznań University of Technology, Poznań 2004]. | | |

Based on the measurement results, it was determined that the hardness of composites with modified rapeseed straw is slightly greater, but after error analysis it was evident that the results fall within the same range as for composites with unmodified rapeseed straw. The hardness values for isotactic polypropylene and composites with rapeseed straw are comparable.

### 2) Impact resistance

Measurements of impact resistance were made on five randomly chosen samples of each type of composite. The table below presents the average values of impact resistance for each type of composite (samples 4 mm thick and 10 mm wide).

**Table 10. Average values of impact resistance for composites**

| Type of material | Hammer work [J] | Impact resistance [kJ/m²] | Error of complex measurement |
|---|---|---|---|
| NK | 0.77 | 19.25 | 2.71 |
| NB | 0.84 | 21 | 1.43 |
| NL | 0.0.77 | 19.25 | 1.17 |
| NC | 0.84 | 21 | 2.12 |
| MK | 0.77 | 19.25 | 1.78 |
| MB | 0.85 | 21.25 | 2.09 |
| ML | 0.75 | 18.75 | 1.65 |
| MC | 0.8 | 20 | 2.14 |

In the same conditions as created for measurements of composites filled with rapeseed straw, the unfilled polypropylene does not break.

It was determined that the values of impact resistance are almost the same for all composites (taking into account the measurement errors). Based on examinations results it was also possible to conclude that modification process, variety of rapeseed straw and cutting line, all have no influence on impact resistance. Composites with unmodified rapeseed straw of the Kaszub and Lisek varieties and composites with modified rapeseed straw of Kaszub variety have the same impact resistance. It was also found that impact resistance of composites is much lower than iPP itself.

### 3) Mechanical properties of composites during tensioning

The properties of composites during tensioning were examined on five randomly chosen samples of each type of composite.

**Table 11. Values measured during tensioning of composites**

| Type of material | Elongation at break [%] | Standard deviation | Tensile stress [MPa] | Standard deviation | Young's modulus [MPa] | Standard deviation |
|---|---|---|---|---|---|---|
| NK | 7.67 | 1.27 | 21.70 | 1.09 | 806.33 | 45.65 |
| NB | 7.16 | 1.02 | 22.83 | 0.61 | 731.03 | 159.19 |
| NL | 6.53 | 1.27 | 23.29 | 0.93 | 810.65 | 112.68 |
| NC | 8.71 | 2.04 | 23.41 | 1.90 | 687.40 | 80.38 |
| MK | 6.70 | 0.65 | 26.30 | 1.78 | 872.10 | 154.29 |
| MB | 7.23 | 0.87 | 25.37 | 0.56 | 721.60 | 171.90 |
| ML | 5.78 | 0.78 | 24.97 | 1.53 | 783.71 | 121.00 |
| MC | 7.79 | 0.86 | 23.77 | 1.16 | 729.59 | 88.42 |
| iPP* | ponad 300 | - | 30.00 | - | 560 | 34 |
| The values for iPP (Malen PF-401) are shown according to the literature [see: T. Górecki; Master's thesis, The Poznan University of Technology, Poznan 2004, and A. Wolska, Master's Thesis, The Poznan University of Technology, Poznań 2004], and W. Szlezyngier, "Tworzywa sztuczne" [The Plastics], Oficyna Wydawnicza Politechniki Rzeszowskiej [The Rzeszów University of Technology Publishing House], Rzeszów 1996] | | | | | | |

### Elongation at break

Based on experiments performed, it was found that the type of filler and the process cutting line of rapeseed straw has no influence on elongation values. Modification of composites with rapeseed straw of Kaszub, Lisek, and Californium varieties caused only slight reduction of elongation percentage. The highest value under tension, above 300%, was measured for pure polypropylene (see: W. Szlezyngier, "Tworzywa sztuczne" [The Plastics], Oficyna Wydawnicza Politechniki Rzeszowskiej [The Rzeszów University of Technology Publishing House], Rzeszów 1996). The addition of filler significantly influences the value of ultimate elongation. Composites filled with Californium rapeseed straw (both modified and raw) showed the highest values of elongation at break (elongation at break), while the composites filled with Lisek variety straw showed the lowest ones.

### True tensile stress

Based on measurement results it was determined that the addition of modified filler increases the value of tensile stress, but after error analysis this increase looks just slight. Addition of each filler reduces the value of tensile stress as compared with pure polymer (iPP).

### Young's modulus

Based on experiments performed, it was found that the addition of filler increases the value of Young's modulus as compared with iPP. Taking into account the standard deviation of measurement results, it can be stated that the values of Young's modulus are similar for all composites with rapeseed straw.

Based on the results of the third series of examinations, it was determined that:
1. Modification of cellulosic fibres slightly increases hardness and true tensile stress as compared with composites containing unmodified rapeseed straw as a filler. After error analysis, this increment can be evaluated as slight and falls within error margin.
2. Use of cellulosic fillers in polypropylene composites results in changes of mechanical properties, the said changes being typical for the process of filling of thermoplastic materials (increase of hardness and Young's modulus and at the same time reduction of impact resistance and ultimate elongation).
3. Mechanical properties (hardness, impact resistance, tensile stress, elongation at break and Young's modulus) are very similar for all varieties of rapeseed straw used as a filler. Thus, the variety of rapeseed the straw of which is used for fabrication of a composite affect neither mechanical nor functional properties of composites.
4. Also from the composite properties point of view it does not matter from which part of rapeseed stalk (i.e. below and above the process line of cutting) the lignocellulosic material is fabricated.
5. The appearance and satisfactory properties of composite predestine it for use in automotive, furniture, and construction industry, as well as in other industry sectors.

The exemplary applications of composites featuring the above properties are described below. The composite granulate containing isotactic polypropylene with the content of 20% and grounded rapeseed straw with size fraction of 1 - 3 mm, obtained by using the double-screw extrusion method, characterised in size of particles on the level of 3 - 4 mm, with the possibility of use in other processes like injection moulding and hydraulic pressing.

The above described results of examination of various properties of isotactic polypropylene and lignocellulosic materials composites confirm the potential of these composites for wide application in the industry. Since it is possible to use various processing methods, various lignocellulosic materials in many forms (fibres, sawdust, woody cores, and powders), and diverse chemical modifications, the opportunity occurs to control the properties of composite materials in order to fit them to a specific practical application.

Composite materials feature high values of mechanical strength and high ability to absorb sound in the selected frequency range. It should be emphasized that these materials, in spite of the fact that they do not contain flame retardants, show favourable flammability properties. Their chief asset is that the filler can be fabricated from waste lignocellulosic materials that are biodegradable.

It is significant that a close correlation between processing parameters and the resulting structure of composite that determines its functional properties has been found.

Exemplary applications of the composite obtained are presented below.

### Example IV

A floor panel in which a matrix is made of isotactic polypropylene with the content of 25%, and the filler is in the form of rapeseed with the content of 75% and grounding fraction of 1 - 4 mm, characterised in higher strength than panels used so far and featuring improved resistance to mechanical damage, particularly resistance to moisture.

### Example V

Floor panels characterised in that they contain a matrix made of isotactic polypropylene (with tacticity of above 90%) with the content of 25% and the filler in the form of rapeseed with the content of 75% and grounding fraction of 20 mm as a maximum; such panels feature advantageous mechanical properties and moisture resistance.

### Example VI

Power supply socket strip, containing 60% of rapeseed and 40% of polypropylene, fabricated from a composite granulate by using an injection moulding method, featuring very high impact resistance and true tensile strength, with the potential for use in elements supplied with electric energy.

### Example VII not according to the invention

A soffit containing low density polyethylene and rapeseed straw in the amount of 50%, fabricated from the polymer in the form of powder, characterised in that the product has the shape allowing to make the so-called "tongue and groove" joints, the shape being possible to be obtained by using the extruding head with a modified rectangular cross-section, and featuring lower values of thermal expansion and improved stiffness.

### Example VIII not according to the invention

Waste and garbage containers, fabricated by using the rotational forming method, and containing 50% of polyethylene and 50% of grounded rapeseed straw.

### Example IX not according to the invention

A wall base moulding made of the composite containing thermoplastic polymer - granulated polyvinyl chloride in the amount of 60% and parenchyma containing rapeseed straw in the amount of 40%, featuring advantageous mechanical strength properties and flammability properties.

### Example X

A composite containing the matrix made of plastic - isotactic polypropylene with mass flow index (MFI) of 0.5 g/10 min. at the temperature of 230°C and under the load of 2.16 kg, and rapeseed straw with the content of 70%, featuring high resistance to acids and detergents and high temperature resistance, therefore, suitable for use as e.g. kitchen tabletop.

### Example XI

An element of a vehicle dashboard, characterised in that it contains 60% of isotactic polypropylene with tacticity of above 85% and mass flow index (MFI) of above 3 g/10 min. at the temperature of 230°C and under the load of 2.16 kg, and grounded rapeseed straw in the amount of 40%, featuring advantageous mechanical properties like impact resistance exceeding 20 kJ/m², and advantageous flammability properties (maximum heat release rate HRRmax during combustion is lower by 50% as compared with unfilled polymer).

## Claims

1. A composite of thermoplastic polymer, **characterised in that** it contains a matrix composed of at least one thermoplastic polymer and a filler in the form of rapeseed straw, wherein the thermoplastic polymers are the polymers with softening temperature not exceeding 260°C and rapeseed straw is ground and contains parenchyma, and the straw content is from 25% to 85% of the composite, and wherein the thermoplastic polymer matrix is isotactic polypropylene, low density polyethylene, high density polyethylene, polyvinyl chloride, polyoxymethylene, 6-polyamide or polybutylene terephthalate and the filler is uniformly distributed in the polymer matrix ensuring uniform distribution of stresses, increasing hardness and Young's modulus, and reducing impact resistance and elongation as compared with an analogous unfilled polymer.

2. A composite according to claim 1, **characterised in that** the presence of a lignocellulosic filler in the polypropylene matrix reduces elasticity as compared with an analogous unfilled polymer.

3. A composite according to claim 2, **characterised in that** it features a higher value of elastic constant than pure (i.e. unfilled) polymer, and the elastic constant of the composite increases as the content of lignocellulosic material increases.

4. A composite according to claim 2, **characterised in that** as the mass fraction of lignocellulosic material in the composite increases, the impact resistance decreases, and the impact resistance is higher for the composite with lignocellulosic filler with particle size of below 0.25 mm.

5. A composite according to claim 1, **characterised in that** the values of Young's modulus for composites are higher than for unfilled polypropylenes, and the value of Young's modulus for composite increases as the mass flow index (MFI) increases.

6. A composite according to claim 1, **characterised in that** the hardness of composite increases as the mass fraction of the lignocellulosic material in the composite increases.

7. A composite according to claim 1, **characterised in that** in the presence of filler the maximum heat release rate from the composite decreases, preferably the heat release rate decreases by at least 15% when the composite is filled with 25% of rapeseed straw.

8. A composite according to claim 1, **characterised in that** the total heat released (THR) is higher for composites than for analogous unfilled polymer and that the composite featuring higher mass flow index (MFI) has greater time to ignition (TTI) value, longer complete combustion time, lower heat release rate (HRR), and lower mass loss rate (MLR), and that time to ignition (TTI) value for composite material is lower than for an analogous pure polymer.

9. A composite according to claim 1 or claim 7, **characterised in that** the mass loss rate (MLR) for composite is by at least 15% lower than for an analogous pure polymer.

10. A composite according to claim 1 or claim 7, **characterised in that** the presence of a lignocellulosic filler causes uniform heat release during combustion, and that the amounts of heat and fumes released are smaller than for an analogous pure polymer, and also that simultaneously time to ignition of the composite is shorter than in case of an analogous unfilled polymer.

11. A composite according to claim 1, **characterised in that** it is in the form of a granulate or powder.

## Patentansprüche

1. Ein Verbund aus einem thermoplastischen Polymer, **dadurch gekennzeichnet, dass** er eine Matrix bestehend aus mindestens einem thermoplastischen Polymer und einen Füllstoff in Form von Rapsstroh umfasst, wobei die thermoplastischen Polymere die Polymere mit einer Erweichungstemperatur von nicht mehr als 260°C sind und Rapsstroh gemahlen wird und Parenchym enthält, und der Strohgehalt 25% bis 85% des Verbunds beträgt, und wobei die thermoplastische Polymermatrix isotaktisches Polypropylen, Polyethylen mit niedriger Dichte, Polyethylen mit höhere Dichte, Polyvinylchlorid, Polyoxymethylen, 6-Polyamid oder Polybutylenterephthalat ist und der Füllstoff gleichmäßig in der Polymermatrix verteilt ist, was eine gleichmäßige Verteilung der Spannungen, eine zunehmende Härte und einen Young' Modul, und verringerte Schlagzähigkeit und Dehnung im Vergleich zu einem analogen ungefüllten Polymer gewährleistet.

2. Verbund nach Anspruch 1, **dadurch gekennzeichnet, dass** die Anwesenheit eines Lignocellulosefüllstoffs in der Polypropylenmatrix die Elastizität im Vergleich zu einem analogen ungefüllten Polymer verringert.

3. Verbund nach Anspruch 2, **dadurch gekennzeichnet, dass** er einen höheren Wert der elastischen Konstante als reines (d.h. ungefülltes) Polymer aufweist und die elastische Konstante des Verbundes mit zunehmendem Gehalt an Lignocellulosematerial zunimmt.

4. Verbund nach Anspruch 2, **dadurch gekennzeichnet, dass** bei einer Erhöhung des Massenanteils an Lignocellulosematerial im Verbund, die Schlagzähigkeit abnimmt und die Schlagzähigkeit für den Verbund mit Lignocellulosefüllstoff mit einer Teilchengröße von unter 0,25 mm höher ist.

5. Verbund nach Anspruch 1, **dadurch gekennzeichnet, dass** die Werte des Young' Moduls für Verbunde höher als bei ungefüllten Polypropylen sind, und der Wert des Young' Moduls für den Verbund mit zunehmendem Massenflußindex (MFI) zunimmt.

6. Verbund nach Anspruch 1, **dadurch gekennzeichnet, dass** die Härte des Verbundes mit zunehmendem Massenanteil des Lignocellulosematerials im Verbund zunimmt.

7. Verbund nach Anspruch 1, **dadurch gekennzeichnet, dass** in Anwesenheit eines Füllstoffs die maximale Wärmefreisetzungsrate aus dem Verbund abnimmt, vorzugsweise die Wärmefreisetzungsrate um mindestens 15% sich verringert, wenn der Verbundstoff mit 25% Rapsstroh gefüllt ist.

8. Verbund nach Anspruch 1, **dadurch gekennzeichnet, dass** die freigesetzte Gesamtwärme (THR) für Verbund höher ist als bei analogem ungefülltem Polymer, und dass der Verbund mit höherem Massenflußindex (MFI) eine längere Zündzeit (TTI), niedrigere Wärmefreisetzungsrate (HRR) und niedrigerer Massenverlustrate (MLR) aufweist, und dieser Zündzeitwert (TTI) für Verbundwerkstoff niedriger als bei einem analogen reinen Polymer ist.

9. Verbund nach Anspruch 1 oder Anspruch 7, **dadurch gekennzeichnet, dass** die Masseverlustrate (MLR) für den Verbund um mindestens 15% niedriger als bei einem analogen reinen Polymer ist.

10. Verbund nach Anspruch 1 oder Anspruch 7, **dadurch gekennzeichnet, dass** die Anwesenheit eines Lignocellulosefüllstoffs eine gleichmäßige Wärmefreisetzung während der Verbrennung bewirkt und dass die erzeugten Wärme-und Dämpfe-mengen kleiner als bei einem analogen reinen Polymer sind und auch gleichzeitig Zündzeit des Verbundes kürzer als bei einem analogen ungefüllten Polymer ist.

11. Verbund nach Anspruch 1, **dadurch gekennzeichnet, dass** er in Form eines Granulats oder Pulvers vorliegt.

## Revendications

1. Un composite de polymère thermoplastique, **caractérisé en ce qu'**il contient une matrice composée d'au moins un polymère thermoplastique et d'une charge sous forme de paille de colza, où les polymères thermoplastiques sont les polymères à température de ramollissement ne dépassant pas 260°C et la paille de colza est broyée et contient du parenchyme, et la teneur en paille est de 25% à 85% du composite, et où la matrice de polymère thermoplastique est le polypropylène isotactique, le polyéthylène basse densité, le polyéthylène haute densité, le polychlorure de vinyle, le polyoxyméthylène, le 6-polyamide ou le polybutylène téréphtalate, et la charge est uniformément répartie dans la matrice de polymère assurant une distribution uniforme des contraintes, augmentant la dureté et le module de Young, et réduisant la résistance au choc et l'allongement par rapport à un polymère non chargé analogue.

2. Un composite selon la revendication 1, **caractérisé en ce que** la présence d'une charge lignocellulosique dans la matrice de polypropylène réduit l'élasticité par rapport à un polymère non chargé analogue.

3. Un composite selon la revendication 2, **caractérisé en ce qu'**il présente une plus grande valeur de la constante élastique que le polymère pur (c'est-à-dire non chargé), et la constante élastique du composite augmente à mesure que la teneur en matière lignocellulosique augmente.

4. Un composite selon la revendication 2, **caractérisé en ce qu'**à mesure que la fraction de masse de la matière lignocellulosique dans le composite augmente, la résistance au choc diminue, et la résistance au choc est plus élevée pour le composite lignocellulosique avec une charge ayant une taille de particules inférieure à 0,25 mm.

5. Un composite selon la revendication 1, **caractérisé en ce que** les valeurs du module d'Young pour les composites sont plus élevées que pour le polypropylène non chargé, et la valeur du module de Young pour le composite augmente à mesure que l'indice de débit massique (IMF) augmente.

6. Un composite selon la revendication 1, **caractérisé en ce que** la dureté du composite augmente à mesure que la fraction de masse du matériau lignocellulosique dans le composite augmente.

7. Un composite selon la revendication 1, **caractérisé en ce qu'**en présence d'une charge, le taux de libération de chaleur maximal à partir du composite diminue, de préférence, le taux de libération de chaleur diminue d'au moins 15% lorsque le composite est chargé de 25% de paille de colza.

8. Un composite selon la revendication 1, **caractérisé en ce que** la chaleur totale libérée (THE) est plus élevée pour les composites que pour le polymère non chargé analogue et que le composite présentant un indice de débit massique supérieur (MFI) a une plus grande valeur de temps d'allumage (TTI), temps de combustion complet plus long, taux de libération de chaleur (HRR) plus faible et taux de perte de masse (MLR) plus faible, et que la valeur du temps d'allumage (TTI) pour le matériau composite est inférieure à celle d'un polymère pur analogue.

9. Un composite selon la revendication 1 ou la revendication 7, **caractérisé en ce que** le taux de perte de masse (MLR) pour le composite est d'au moins 15% inférieur à celui d'un polymère pur analogue.

10. Un composite selon la revendication 1 ou la revendication 7, **caractérisé en ce que** la présence d'une charge lignocellulosique provoque une libération de chaleur uniforme pendant la combustion, et que les quantités de chaleur et de fumée libérées sont plus petites que pour un polymère pur analogue, et aussi que simultanément le temps d'allumage du composite est plus court que dans le cas d'un polymère non chargé analogue.

11. Un composite selon la revendication 1, **caractérisé en ce qu'**il se présente sous la forme d'un granulé ou d'une poudre.
